# EUROPEAN PATENT APPLICATION

(11) **EP 4 730 640 A1**
(43) Date of publication of application: **22.04.2026**
(21) Application number: 24825642.2
(22) Date of filing: 22.05.2024
(51) Int. Cl.: H02P 27/06

(54) **ROTARY ELECTRIC MACHINE CONTROL DEVICE AND PROGRAM**

(30) Priority: 19.06.2023 JP 2023100057
(71) Applicant: DENSO CORPORATION, Kariya-city, Aichi 448-8661 (JP)
(72) Inventor: SEGUCHI, Masahiro, Kariya-city, Aichi 448-8661 (JP); TSUCHIYA, Hiroyuki, Kariya-city, Aichi 448-8661 (JP)
(74) Representative: Kuhnen & Wacker Patent- und Rechtsanwaltsbüro PartG mbB
(86) International application number: PCT/JP2024/018858
(87) International publication number: WO 2024/262235

(57) **Abstract**

A motor control device is applied to a system including a motor (40) including a stator (50) provided with a stator winding (52) and a rotor (60) provided with a field winding (70), and an inverter (20) electrically connected to the stator winding. The rotor includes diodes (80), and capacitors (90). The motor control device includes: a synthetic current calculation unit configured to calculate a synthetic current by superimposing a harmonic wave to induce a field current in the field winding, onto a fundamental wave flowing through the stator winding, and a switch control unit configured to perform switching control of the inverter to cause the synthetic current to flow through the stator winding. The synthetic current calculation unit is configured to calculate synthetic current such that: the frequency of the harmonic wave 's envelope curve is equivalent to the frequency of fundamental wave, and the phase angle (θh) between the envelope curve and the fundamental wave is equivalent to a reference phase difference, and set the reference phase difference to be within the range of [50° + 180° × N] and [90° + 180° × N] in electrical angle (N = 0, 1, -1, -2).

## Description

### [CROSS-REFERENCE TO RELATED APPLICATIONS]

This application is based on and claims the benefit of priority from Japanese Application No. 2023-100057 filed on June 19, 2023, the contents of which are hereby incorporated by reference.

### [TECHNICAL FIELD]

The present disclosure relates to a motor control device and a program.

### [BACKGROUND ART]

A system comprising a motor provided with a stator including a stator winding and a rotor including a field winding, and an inverter electrically connected to the stator winding is known. In this system, the rotor includes a rotor core, a plurality of main poles, diodes, and capacitors. The plurality of main poles are arranged at predetermined intervals in the circumferential direction and protrude radially from the rotor core. The field winding includes a first winding and a second winding electrically connected in series. The first winding and the second winding are wound around each respective main pole of the plurality of main poles. Each of the diodes are electrically connected in parallel with a series-connected element of the first winding and the second winding. Each of the capacitors is electrically connected in parallel with either the first winding or the second winding. An example of such a system is described in Patent Document 1.

The system further comprises a control device that performs switching control of the inverter such that harmonic wave for inducing field current in field winding is superimposed on fundamental wave flowing through stator winding.

### [PRIOR ART REFERENCES]

### [PATENT DOCUMENT]

[Patent Document 1] JP2020191743A

### [SUMMARY OF INVENTION]

The induced field current contains a ripple component. These ripple component causes torque ripple in the motor's generated torque. A new configuration capable of reducing the torque ripple is desired.

This disclosure aims to provide a motor control device and a program that can suppress the torque ripple of the motor's generated torque.

The present disclosure relates to a motor control device applied to a system comprising a motor including a stator provided with a stator winding and a rotor provided with a field winding, and an inverter electrically connected to the stator winding. The rotor comprises a rotor core, a plurality of main poles, diodes, and capacitors. The plurality of main poles are provided at predetermined intervals in the circumferential direction and protrude radially from the rotor core. The field winding includes a first winding and a second winding electrically connected in series. The first winding and the second winding are wound around each of the plurality of main poles. Each of the diodes is electrically connected in parallel with a series-connected element of the first winding and second winding. Each of the capacitors is electrically connected in parallel with either the first winding or the second winding. The motor control device comprises: a synthetic current calculation unit configured to calculate a synthetic current by superimposing a harmonic wave to induce a field current in the field winding, onto a fundamental wave flowing through the stator winding, and a switch control unit configured to perform switching control of the inverter to cause the synthetic current to flow through the stator winding. The synthetic current calculation unit is configured to calculate synthetic current such that: the frequency of the harmonic wave 's envelope curve is equivalent to the frequency of fundamental wave, and the phase angle (θh) between the envelope curve and the fundamental wave is equivalent to a reference phase difference. The synthetic current calculation unit is configured to set the reference phase difference within the range of [50° + 180° × N] and [90° + 180° × N] in electrical angle (N = 0, 1, -1, -2).

In the present disclosure, the synthetic current calculation unit is configured to calculate synthetic current such that: the frequency of the harmonic wave 's envelope curve is equivalent to the frequency of fundamental wave,

When changing the phase difference between the envelope curve and the fundamental wave, torque ripple of the motor's generated torque changes. When N is set to 0, 1, -1, or -2, torque ripple is suppressed by setting the phase difference between the envelope curve and the fundamental wave within the range between [50° + 180° × N] and [90° + 180° × N] in electrical angle.

Therefore, the synthetic current calculation unit further imposes the condition that the harmonic wave 's phase difference between the envelope curve and the fundamental wave is set to the above reference phase difference to calculate the synthetic current. This suppresses torque ripple of the motor's generated torque. Furthermore, a simple parameter such as the phase difference is used as a parameter for reducing torque ripple.

### [BRIEF DESCRIPTION OF DRAWINGS]

The above objectives and other objectives, features, and advantages of the present disclosure will become clearer through the following detailed description with reference to the accompanying drawings. These drawings are as follows:
Fig. 1 is a general configuration diagram of a motor control system according to a first embodiment;
Fig. 2 is a diagram showing an inverter and its peripheral components;
Fig. 3 is a cross-sectional view of a rotor and a stator;
Fig. 4 is a diagram showing an electrical circuit in the rotor;
Fig. 5 is a block diagram of a torque control process performed by a control device;
Fig. 6 is a diagram showing a fundamental wave, a harmonic wave, and a harmonic wave phase difference;
Fig. 7 shows calculation results showing a relationship between the harmonic wave phase difference, generated torque, and a torque ripple rate when the motor speed is 1500 rpm;
Fig. 8 is a time chart showing a transition of the generated torque when the motor speed is 1500 rpm;
Fig. 9 is a time chart showing a transition of the generated torque when the motor speed is 1500 rpm;
Fig. 10 shows calculation results showing a relationship between the harmonic wave phase difference, the generated torque, and the torque ripple rate when the motor speed is 3000 rpm;
Fig. 11 is a time chart showing a transition of the generated torque when the motor speed is 3000 rpm;
Fig. 12 is a time chart showing a transition of the generated torque when the motor speed is 3000 rpm;
Fig. 13 is a schematic diagram showing a magnetic flux flow;
Fig. 14 is a schematic diagram showing a magnetic flux flow;
Fig. 15 is a schematic diagram showing a magnetic flux flow and a force state;
Fig. 16 is a schematic diagram showing a magnetic flux flow corresponding to a harmonic wave phase difference;
Fig. 17 is a flowchart showing torque control processing steps;
Fig. 18 is a cross-sectional view of the rotor and the stator according to a second embodiment;
Fig. 19 is a diagram showing a notch at the tip of a main pole;
Fig. 20 is a diagram showing the notch of the main pole;
Fig. 21 shows calculation results showing the relationship between the harmonic wave phase difference, the generated torque, and the torque ripple rate when the motor speed is 500 rpm and the main pole is not notched;
Fig. 22 is a time chart showing the transition of generated torque when the motor speed is 500 rpm and the main pole is not notched;
Fig. 23 is a time chart showing a transition of generated torque, etc., when the motor speed is 500 rpm, the main pole is not notched, and the harmonic wave phase difference is 110°;
Fig. 24 is a time chart showing a transition of generated torque, etc., when the motor speed is 500 rpm, the main pole is not notched, and the harmonic wave phase difference is 70°;
Fig. 25 shows the calculation results showing the relationship between the harmonic wave phase difference, the generated torque, and the torque ripple rate when the motor speed is 500 rpm and the main pole is notched;
Fig. 26 is a time chart showing a transition of the generated torque when the motor speed is 500 rpm and the main pole is notched;
Fig. 27 is a time chart showing a transition of generated torque, etc., when the motor speed is 500 rpm, the main pole is notched, and the harmonic wave phase difference is 110°;
Fig. 28 is a time chart showing a transition of the generated torque, etc., when the motor speed is 500 rpm, the main pole is notched, and the harmonic wave phase difference is 70°;
Fig. 29 is a diagram showing the relationship between a phase of fundamental wave and a reference phase according to a third embodiment; and
Fig. 30 is a flowchart showing procedure of torque control processing.

### [DESCEIPTION OF EMBODIMENTS]

Multiple embodiments will be described with reference to the drawings. In multiple embodiments, functionally and/or structurally corresponding parts and/or associated parts may be assigned the same reference numerals or reference numerals differing by one hundred or more places. For corresponding parts and/or associated parts, reference may be made to the description of other embodiments.

### <First Embodiment>

The following describes a first embodiment embodying a motor and a motor control device of the present disclosure, with reference to the drawings. The motor and the motor control device constitute a motor control system, which is mounted on a vehicle. The motor provides power for travelling to the vehicle.

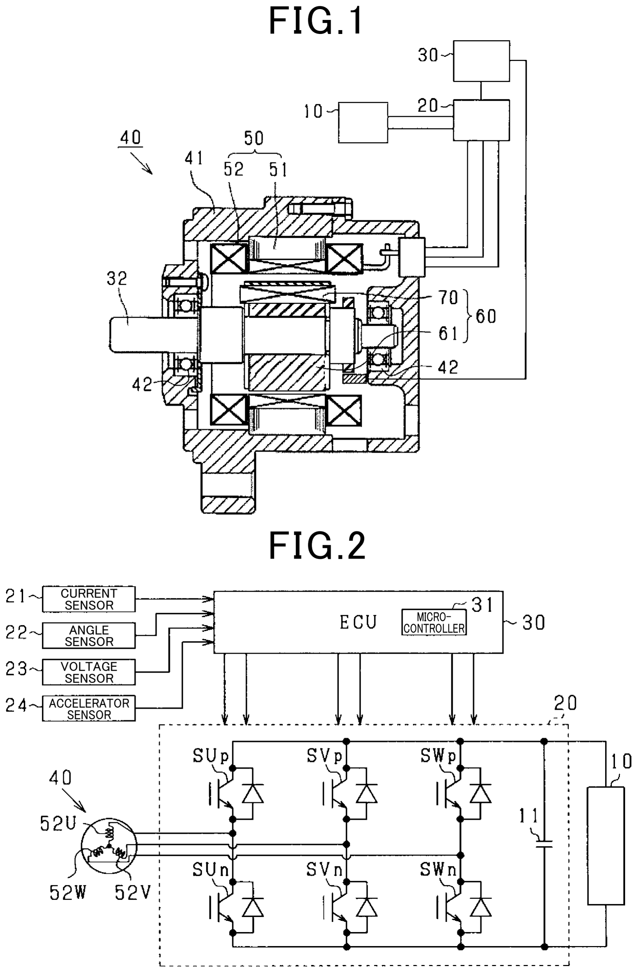

As shown in Figure 1, the motor control system comprises a DC power supply 10, an inverter 20, a control device 30, and a motor 40. The motor 40 is a field winding-type synchronous machine. For example, an integrated electromechanical drive unit may be configured with the motor 40, the inverter 20, and the control device 30, or each of the motor 40, the inverter 20, and the control device 30 may be configured as separate components.

The motor 40 is provided with a housing 41, a stator 50 and a rotor 60. The stator 50 and the rotor 60 are stored within the housing 41. The motor 40 of this embodiment is an inner rotor type motor in which the rotor 60 is disposed inwardly with respect to the radial direction of the stator 50.

The stator 50 is provided with a stator core 51 and a stator winding 52. The stator winding 52 may be composed of, for example, a copper wire. The stator winding 52 includes a U-phase winding 52U, a V-phase winding 52V, and a W-phase winding 52W arranged with an offset of 120° therebetween in electrical angle.

The rotor 60 is provided with a rotor core 61 and a field winding 70. The field winding 70 may be formed by, for example, a compression molding. This improves packing density and makes the field winding 70 easier to assemble. The field winding 70 may be composed of, for example, an aluminum wire. An aluminum wire has a low specific gravity, reducing centrifugal force when the rotor 60 rotates. An aluminum wire has lower strength and hardness compared to a copper wire, making it easier to compression mold. The field winding 70 is not limited to an aluminum wire and may also be a copper wire or a CNT (carbon nanotube) and so on. The field winding 70 need not be compression molded.

A rotary shaft 32A is inserted to a central hole of the rotor core 61. The rotary shaft 32 is supported by a bearing 42 to enable rotation relative to the housing 41.

As shown in Figure 2, the inverter 20 includes a series-connected element of a U-phase upper arm switch SUp and a U-phase lower arm switch Sun, a series-connected element of a V-phase upper arm switch SVp and a V-phase lower arm switch SVn, and a series-connected element of a W-phase upper arm switch SWp and a W-phase lower arm switch SWn. The first end of the U-phase winding 52U is connected to a connection point of the U-phase upper arm switch SUp and the U-phase lower arm switch SUn. The first end of the V-phase winding 52V is connected to a connection point of the V-phase upper arm switch SVp and the V-phase lower arm switch SVn. The first end of the W-phase winding 52W is connected to a connection point of the W-phase upper arm switch SWp and the W-phase lower arm switch SWn. The second ends of each of the U-phase winding 52U, the V-phase winding 52V, and the W-phase winding 52W is connected to a neutral point. Therefore, the U-phase winding 52U, the V-phase winding 52V, and the W-phase winding 52W are connected in a star configuration. In this embodiment, each switch SUp to SWn is an IGBT. A freewheeling diode is connected in reverse parallel to each switch SUp to SWn.

The collector of each of the U-phase upper arm switch SUp, the V-phase upper arm switch SVp, and the W-phase upper arm switch SWp is connected to the positive terminal of the DC power supply 10. The negative terminal of the DC power supply 10 is connected to the emitter of each of the U-phase lower arm switch SUn, the V-phase lower arm switch SVn, and the W-phase lower arm switch SWn. A smoothing capacitor 11 is connected in parallel to the DC power supply 10.

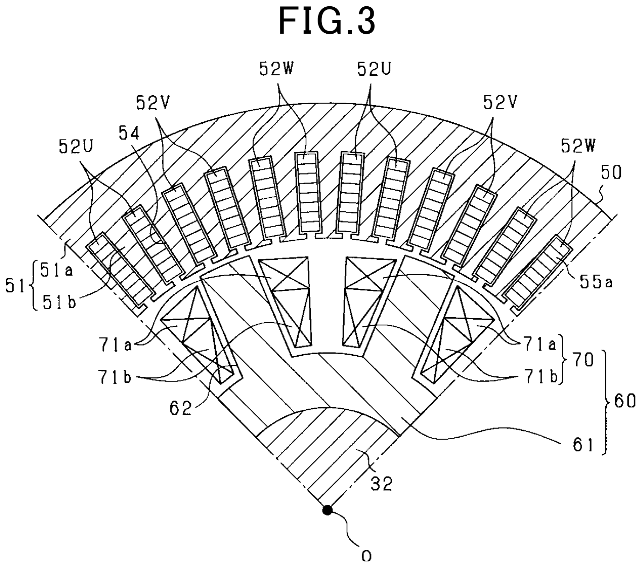

Next, using Figure 3, the stator 50 and the rotor 60 are described.

The stator 50, the rotor 60, and the rotating shaft 32 are arranged about a common rotational center axis O. In the following description, the direction in which the rotating shaft 32 extends is defined as an axial direction, the direction extending radially from the center of the rotating shaft 32 is defined as a radial direction, and the direction extending circumferentially about the rotating shaft 32 is defined as a circumferential direction.

The stator 50 may be composed of laminated steel sheets, which are soft magnetic materials. The stator 50 includes a ring-shaped back yoke 51a and a plurality of teeth 51b protruding radially inward from the back yoke 51a. A plurality of slots 54 are formed circumferentially between adjacent teeth 51b. A stator winding 52 is formed by storing phase windings winding of each phase in a predetermined order within each slot 54. For example, the stator 50 may have a segmented coil structure using a plurality of conductor segments. The structure of the stator winding 52 is arbitrary.

The rotor 60 may be composed of laminated steel sheets, which are soft magnetic materials. The rotor 60 includes a cylindrical rotor core 61 and a plurality of main poles 62 protruding radially outward from the rotor core 61. In this embodiment, eight main poles 62 are provided at equal intervals in the circumferential direction.

The field winding 70 includes a first winding 71a and a second winding 71b. In each main pole 62, the first winding 71a is wound radially outward, and the second winding 71b is wound radially inward relative to the first winding 71a. In each main pole 62, the winding directions of the first winding 71a and the second winding 71b are the same. Regarding circumferentially adjacent main poles 62, the winding direction of each winding 71a, 71b wound on one main pole 62 is opposite to the winding direction of each winding 71a, 71b wound on the other main pole 62. Consequently, for circumferentially adjacent main poles 62, the magnetization directions are opposite to each other.

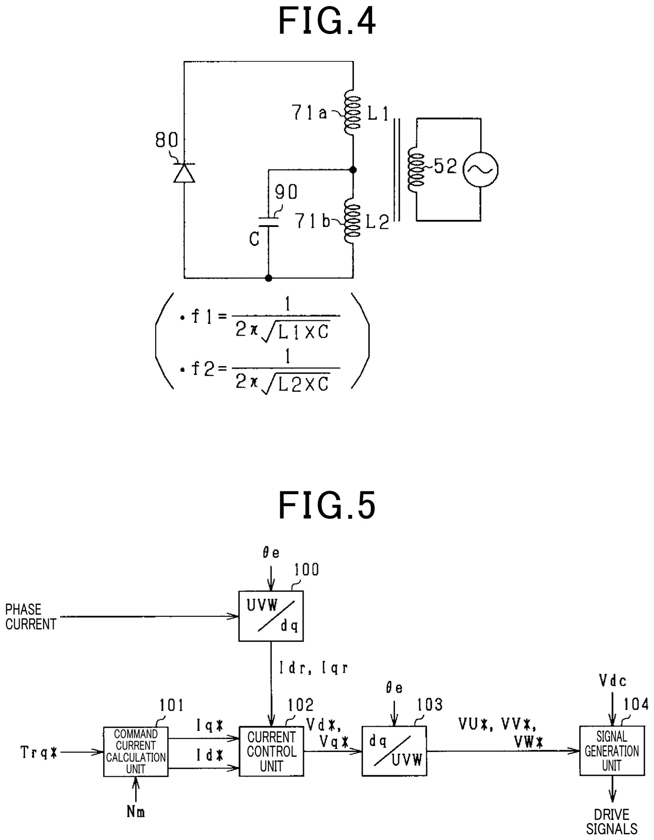

Figure 4 shows an electrical circuit including each winding 71a and winding 71b wound on the common main pole 62 in the rotor 60. The rotor 60 is provided with diodes 80 and capacitors 90 that function as rectifying elements. Each of the diodes 80 is electrically connected in parallel with the series-connected element of the first winding 71a and the second winding 71b. The cathode of each of the diodes 80 is connected to the first end of the first winding 71a, and the second end of the first winding 71a is connected to the first end of the second winding 71b. The anode of each of the diodes 80 is connected to the second terminal of second winding 71b. Each of the capacitors 90 is electrically connected in parallel with the second winding 71b. In Figure 4, L1 shows the inductance of the first winding 71a, L2 shows the inductance of the second winding 71b, and C shows the capacitance of the capacitor 90.

In this embodiment, a series resonant circuit including the first winding 71a, the capacitor 90, and the diode 80 is configured, and a parallel resonant circuit including the second winding 71b and the capacitor 90 is configured. In Figure 4, f1 shows a first resonance frequency, which is a resonance frequency of the series resonant circuit, and f2 shows a second resonance frequency, which is a resonance frequency of the parallel resonant circuit.

The anode of the diode 80 may be connected to the first end of the first winding 71a, and the cathode of the diode 80 may be connected to the second end of the second winding 71b.

As shown in Figure 2, the control system includes a current sensor 21, an angle sensor 22, a voltage sensor 23, and an accelerator sensor 24. The current sensor 21 detects current flowing through at least two phases of the motor 40. The angle sensor 22 detects rotational angle (electrical angle) of the rotor 60. The voltage sensor 23 detects voltage of the DC power supply 10. The accelerator sensor 24 detects degree of operation of the accelerator operator (specifically, the accelerator pedal) operated by a vehicle driver. The detected values from sensors 21 to 24 are input to the control device 30.

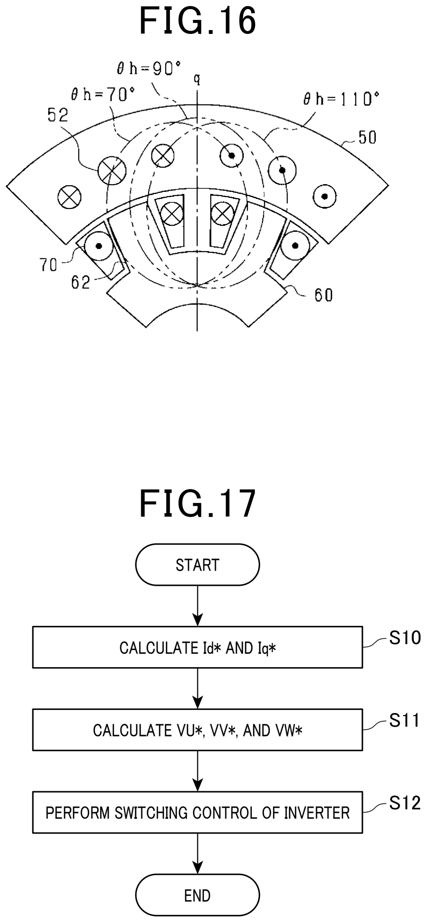

The control device 30 is an electronic control unit (ECU) primarily composed of a microcontroller 31. The microcontroller 31 is provided with a CPU (Central Processing Unit). The functions of the microcontroller 31 are realized by software recorded in a physical memory device and a computer executing it, by software alone, by hardware alone, or by a combination thereof. For example, in a case that the microcontroller 31 includes electronic circuitry as hardware, it may be provided with digital circuits containing numerous logic circuits or analog circuits. For example, the microcontroller 31 may execute a program stored in a non-transitory tangible storage medium serving as its own storage. The program may include, for example, a processing program shown in Figures 5 and 17, described later. By executing set of instructions constituting the program, the method corresponding to the program is executed. The storage may be, for example, a non-volatile memory. The program stored in the storage may be updated via a communication network such as the Internet, using methods such as OTA (Over The Air).

The control device 30 generates drive signals to turn on and off the switches SUp to SWn, which constitute the inverter 20. Specifically, the control device 30 generates the drive signals to turn on and off each arm switch SUp to SWn to convert DC power output from the DC power source 10 into AC power and supply it to the U-phase winding 52U, the V-phase winding 52V, and the W-phase winding 52W. Then the control device 30supplies the generated drive signals to the gates of each arm switch SUp to SWn.

The control device 30 turns on and off each switch SUp to SWn to make a fundamental wave and a harmonic wave flow through each phase winding 52U, 52V, and 52W. The fundamental wave is current for generating torque in motor 40. The harmonic wave is current for energizing the field winding 70 to induce field current in the field winding 70. The phase currents flowing through each phase winding 52U, 52V, and 52W are phase-shifted by 120° electrical angle.

Using Figure 5, torque control of the motor 40 performed by control device 30 is described.

The two-phase conversion unit 100 converts the U, V, and W-phase currents in the three-phase fixed coordinate system into d-axis current Idr and q-axis current Iqr in the two-phase rotating coordinate system (d-q coordinate system) based on the detection value from the current sensor 21 and the electrical angle θe detected by the angle sensor 22.

The command current calculation unit 101 calculates a d-axis command current Id* and a q-axis command current Iq* based on a command torque Trq*. The d-axis command current Id* and the q-axis command current Iq* are calculated based on the values of the fundamental wave and the harmonic wave that excites the field winding 70. Specifically, the d-axis command current Id* is the sum of the d-axis fundamental command current, which is DC component corresponding to fundamental wave, and the d-axis harmonic command current, which is AC component corresponding to harmonic wave. The q-axis command current Iq* is the sum of the q-axis fundamental command current, which is DC component corresponding to fundamental wave, and the q-axis harmonic command current, which is AC component corresponding to harmonic wave. These correspond to "synthetic current " in this embodiment. For example, the command current calculation unit 101 may calculate the d-axis command current Id* and the q-axis command current Iq* based on the command torque Trq* and map information relating the command torque Trq*, the d-axis command current Id*, and the q-axis command current Iq*. The command torque Trq* may be set larger as the accelerator operation amount detected by the accelerator sensor 24 increases. In this embodiment, the command current calculation unit 101 corresponds to "synthetic current calculation unit ".

The current control unit 102 calculates a d-axis current deviation ΔId by subtracting the d-axis current Idr from the d-axis command current Id*. The current control unit 102 calculates a q-axis current deviation ΔIq by subtracting the q-axis current Iqr from the q-axis command current Iq*.

The current control unit 102 calculates a d-axis command voltage Vd* as manipulated variable for the feedback control operation to bring the d-axis current Idr closer to the d-axis command current Id*. The current control unit 102 calculates a q-axis command voltage Vq* as manipulated variable for feedback control to bring the q-axis current Iqr closer to the q-axis command current Iq*.

The three-phase conversion unit 103 converts the d-axis command voltage Vd* and the q-axis command voltage Vq* into the U, V, and W-phase voltage command values VU*, VV*, and VW* in the three-phase fixed coordinate system, based on the d-axis command voltage Vd*, the q-axis command voltage Vq*, and the electrical angle θe. The U, V, and W-phase voltage command values VU*, VV*, and VW* form waveforms with phases shifted by 120 degrees in electrical angle.

The frequencies of the harmonic components contained in the U, V, and W-phase voltage command values VU*, VV*, and VW* are set to frequencies near the first resonance frequency f1 or near the second resonance frequency f2. This enhances the excitation properties, reduces the amplitude of the harmonic wave, and lowers torque ripple in the motor 40.

The signal generation unit 104 generates the drive signals for the upper and lower arm switches SUp to SWn of U, V, and W-phase based on three-phase modulation using the voltage command values VU*, VV*, and VW* and DC power supply voltage Vdc detected by the voltage sensor 23. The generated drive signals are input to the gates of each switch. As a result, the switching control of the inverter 20 is performed. In this embodiment, the signal generation unit 104 corresponds to "switch control unit ".

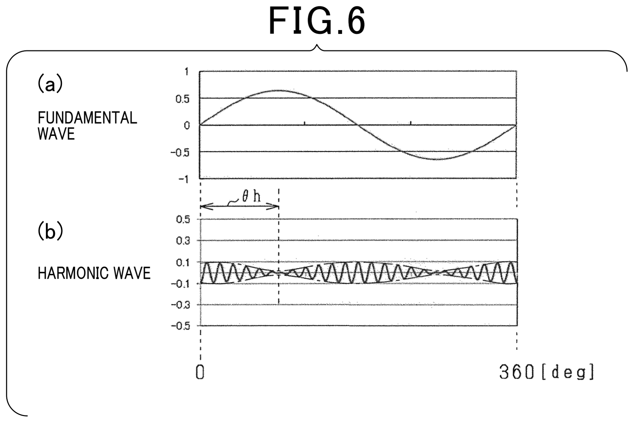

The switching control of the inverter 20 causes each phase winding 52U, 52V, 52W to carry a synthetic current, which is superimposed with a harmonic wave (refer to solid line in part (b) of Figure 6) on a fundamental wave (part (a) of Figure 6). Here, the dotted line in part (b) of Figure shows an envelope curve of the harmonic wave. The envelope curve of the harmonic wave has the same period as fundamental wave. The values on the vertical axis shown in Figure 6 indicate the relative relationship in amplitude between the waveforms shown in part (a) and (b) of Figure 6.

θh shown in Figure 6 is a phase difference between an envelope curve of the harmonic wave and the fundamental wave. Hereafter, this phase difference is referred to as a harmonic wave phase difference. As shown in Figure 6, two envelope curves of the harmonic wave exist. In this embodiment, the harmonic wave phase difference θh is a phase difference between the zero-up cross timing of the fundamental wave and the zero-cross timing (zero-up cross timing or zero-down cross timing) of the two envelope curves. In the example shown in Figure 6, the zero-up cross timing of one of the two envelope curves of the harmonic wave coincides with the zero-down timing of the other envelope curve.

The command current calculation unit 101 of control device 30 calculates the d-axis command current Id* and the q-axis command current Iq* such that the harmonic wave phase difference θh becomes a reference phase difference in the above torque control. In this embodiment, the reference phase difference is set within a range between [50° + 180° × N] and [90° + 180° × N] (N = 0, 1, -1, -2) in electrical angle. The sign of the harmonic wave phase difference θh is defined as positive when the phase of the envelope curve in the harmonic wave is advanced relative to fundamental wave, and as negative when the phase of the envelope curve in the harmonic wave is delayed relative to fundamental wave. In the example shown in Figure 6, the harmonic wave phase difference θh is positive. Calculating the d-axis command current Id* and the q-axis command current Iq* such that the harmonic wave phase difference θh becomes the reference phase difference is to reduce the torque ripple rate while maintaining maximum generated torque of the motor 40 at a high level. In this embodiment, the torque ripple rate is the ratio (ΔTr/Tdc) of the fluctuation amount [ΔTr] of the generated torque to DC component Tdc of the generated torque in the motor 40. The fluctuation amount may be, for example, difference between the maximum and minimum values over one cycle of the generated torque.

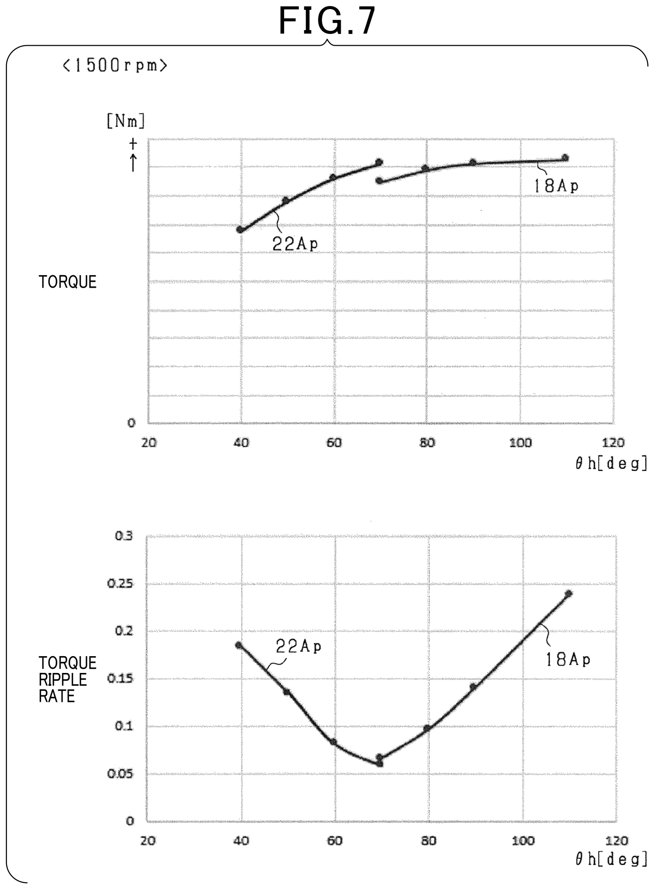

Figure 7 shows calculation results showing the relationship between the harmonic wave phase difference θh and the generated torque of motor 40 when the speed of the rotor 60 is 1500 rpm, and calculation results showing the relationship between the harmonic wave phase difference θh and the torque ripple rate. In Figure 7, the 18Ap line shows the respective calculation results when the peak value of the harmonic wave is 18% of the peak value of the fundamental wave. The 22Ap line shows the respective calculation results when the peak value of the harmonic wave is 22% of the peak value of the fundamental wave. Calculations for the 18Ap line were performed for each of the harmonic wave phase difference θh values of 110°, 90°, 80°, and 70°. Calculations for the 22Ap line were performed for each of the harmonic wave phase difference θh values of 70°, 60°, 50°, and 40°. The peak value of harmonic wave is increased in the region where the harmonic wave phase difference θh is less than 70° to minimize the variation in the maximum generated torque of the motor 40 within the harmonic wave phase difference θh range of 40° to 110°.

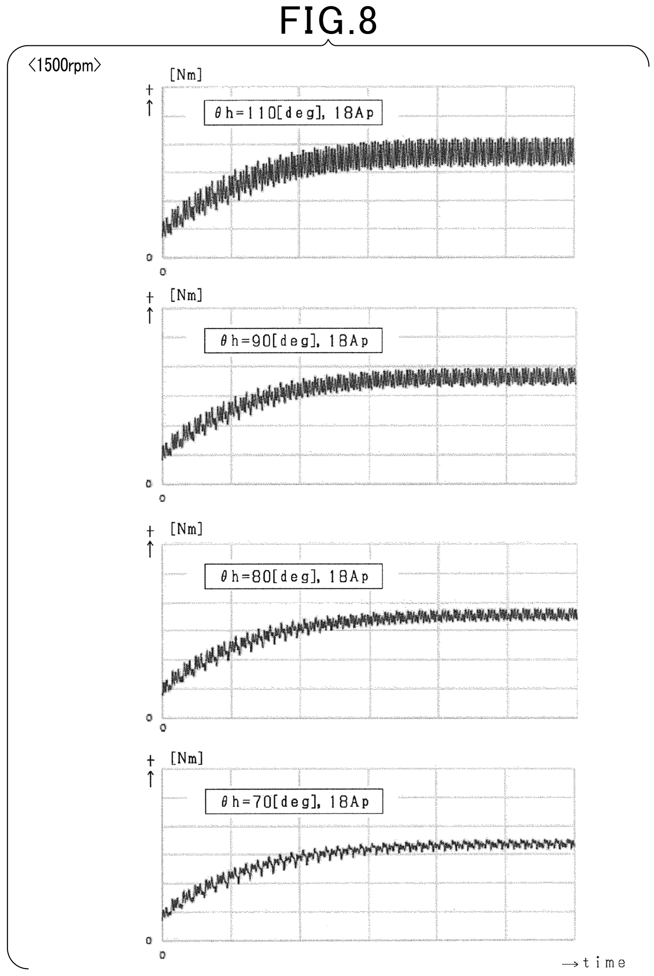

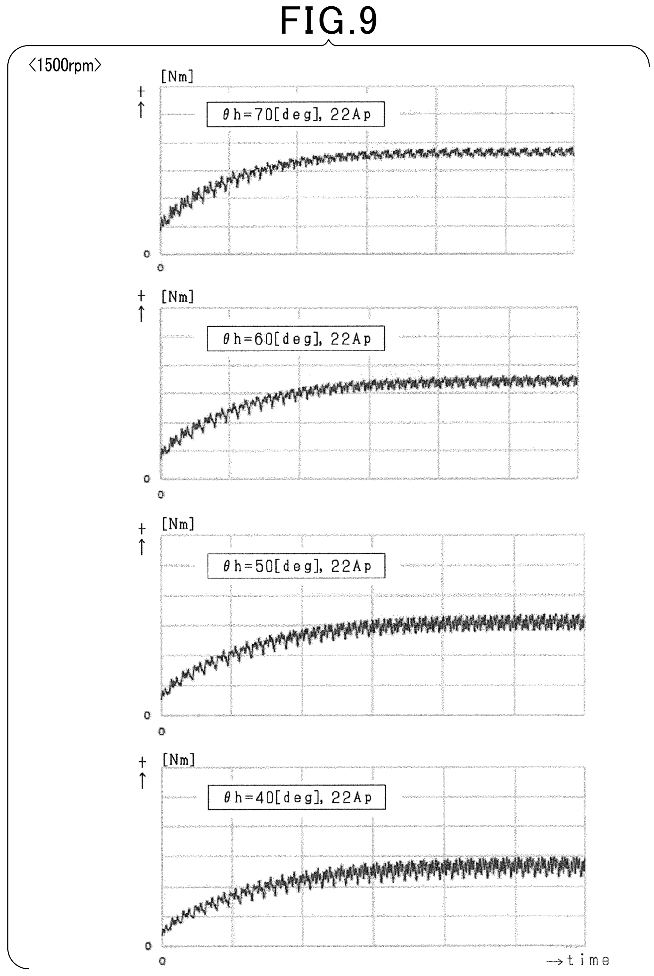

Among the calculation results showing the relationship between the generated torque and the torque ripple rate shown in Figure 7, the results corresponding to each of the harmonic wave phase differences θh of 110°, 90°, 80°, and 70° are obtained from calculation results of the transition of the generated torque shown in Figure 8. Among the calculation results showing the relationship between the generated torque and the torque ripple rate shown in Figure 7, the results corresponding to each of the harmonic wave phase differences θh of 70°, 60°, 50°, and 40° are obtained from calculation results of the transition of the generated torque shown in Figure 9. In each graph of Figures 8 and 9, the horizontal axis scale is the same, and the vertical axis scale is also the same.

The torque ripple rate increases as the harmonic wave phase difference θh becomes greater than 90° (i.e., as the phase of the harmonic wave 's envelope curve delays behind fundamental wave). On the other hand, the torque ripple rate decreases as the harmonic wave phase difference θh becomes less than 90° (i.e., as the phase of the harmonic wave 's envelope curve leads fundamental wave), reaching a minimum near 70°. The torque ripple rate increases as the harmonic wave phase difference θh becomes smaller than 70°. The torque ripple rate when the harmonic wave phase difference θh is 50° is equivalent to that when the harmonic wave phase difference θh is 90°.

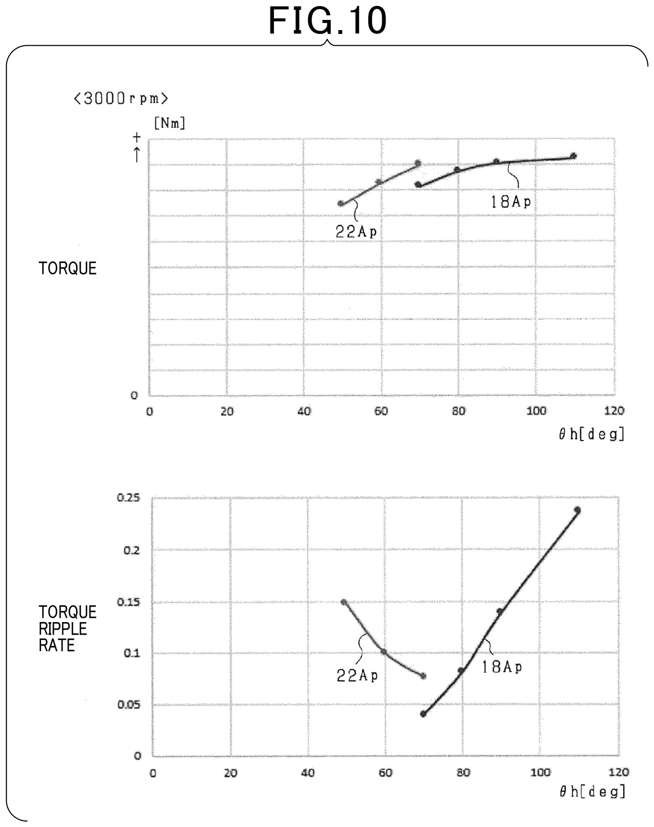

Figure 10 shows calculation results showing the relationship between the harmonic wave phase difference θh and the generated torque of the motor 40, and calculation results showing the relationship between the harmonic wave phase difference θh and the torque ripple rate, when the speed of the rotor 60 is 3000 rpm. In Figure 10, setting conditions for peak value of the harmonic wave is the same as in Figure 7. Furthermore, in each graph of Figure 10, the horizontal axis scale is the same as in Figure 7, and the vertical axis scale is also the same as in Figure 7.

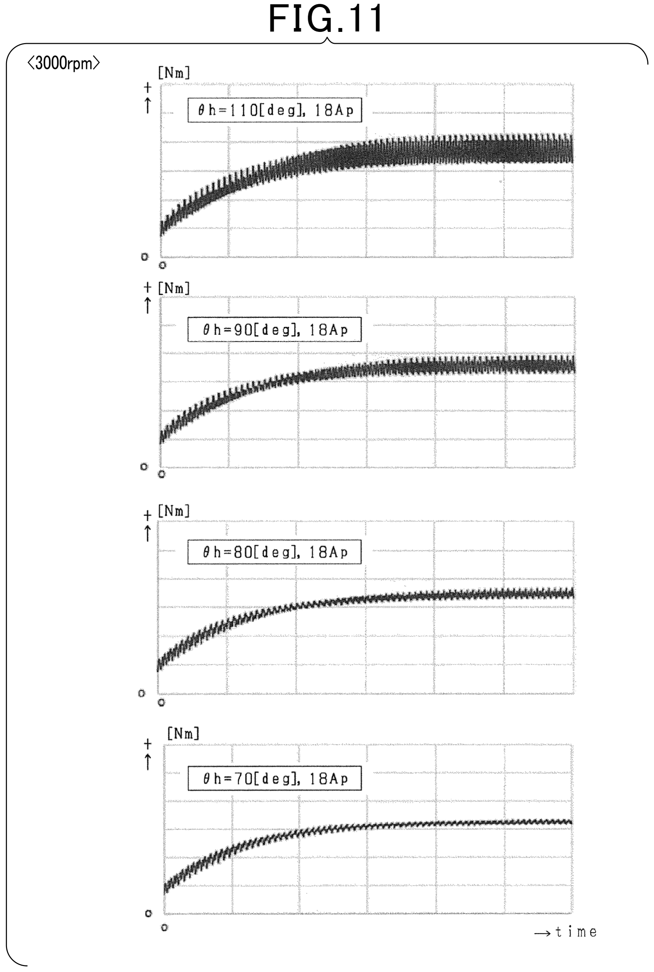

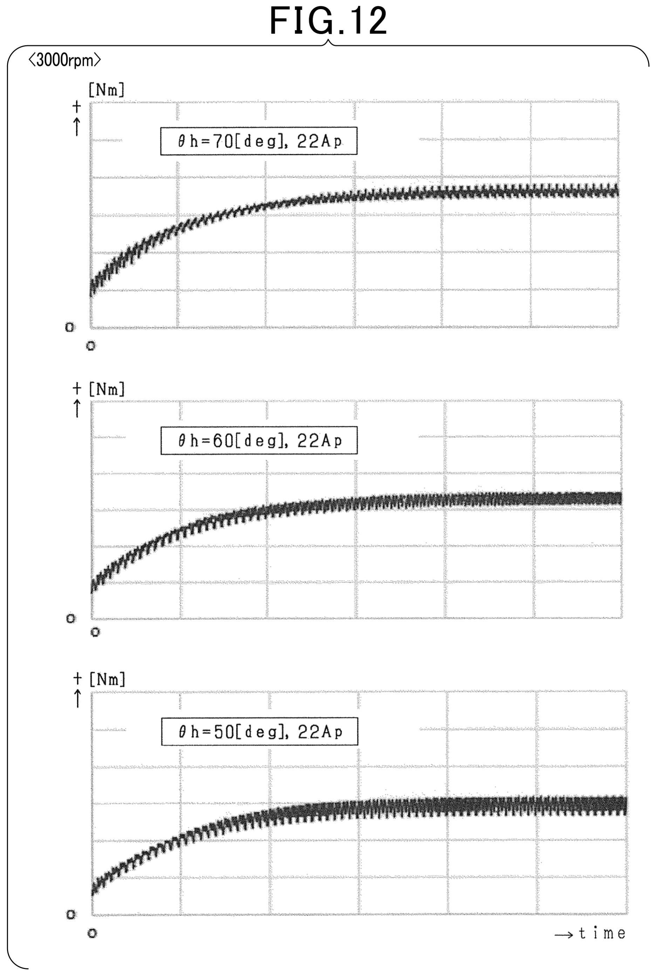

Among the calculation results of the relationship between the generated torque and the torque ripple rate shown in Figure 10, the results corresponding to each of the harmonic wave phase differences θh of 110°, 90°, 80°, and 70° were obtained from calculation results of the transition of the generated torque shown in Figure 11. Furthermore, among the calculation results of the relationship between the generated torque and the torque ripple rate shown in Figure 10, the results corresponding to each of the harmonic wave phase differences θh of 70°, 60°, and 50° were obtained from the calculation results of the generated torque transition shown in Figure 12. In each graph of Figures 11 and 12, the horizontal axis scale is the same, and the vertical axis scale is also the same.

Like Figure 7, the torque ripple rate increases as the harmonic wave phase difference θh becomes greater than 90° and decreases as the harmonic wave phase difference θh becomes smaller than 90°, reaching a minimum near 70°. The torque ripple rate increases as harmonic wave phase difference θh becomes smaller than 70°. The torque ripple rate when the harmonic wave phase difference θh is 50° is equivalent to the torque ripple rate when the harmonic wave phase difference θh is 90°.

Based on the above-mentioned calculation results, regardless of the speed of the rotor 60, when the harmonic wave phase difference θh is within the range between 50° and 90°, the generated torque is maintained at a high level, enabling low torque ripple rate. Therefore, the reference phase difference is set within the range between 50° and 90°. The reference phase difference may, for example, be set within the range between 60° and 80°, within the range between 65° and 75°, within the range between 60° and 70°, or within the range between 70° and 80°.

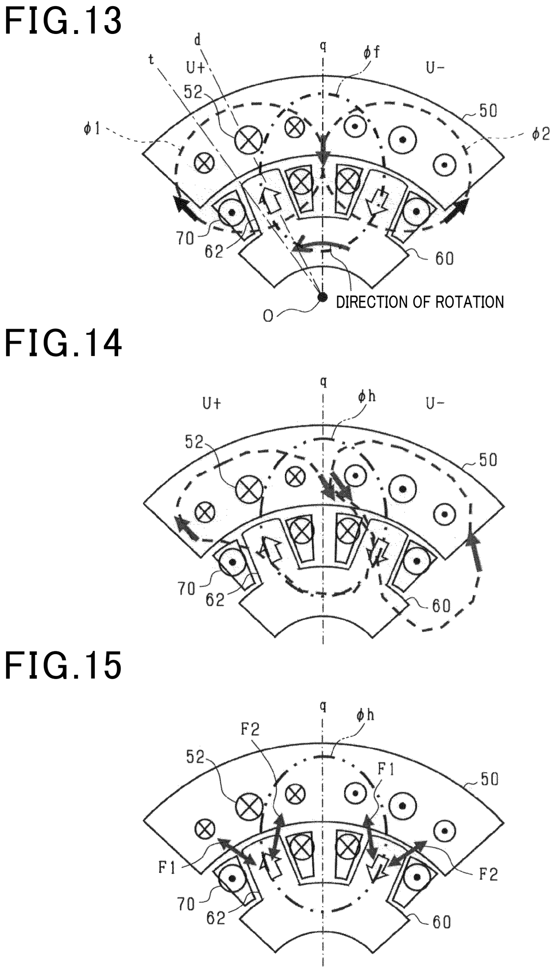

Figure 13 shows a magnetic flux generated between the stator 50 and the rotor 60. In Figure 13, U-phase current flows through U-phase winding (U+, U-). As shown by the dashed lines in the figure, the flow of the U-phase current generates mutually opposing magnetic fluxes φ1 and φ2 between the stator 50 and the rotor 60. The harmonic wave component of the U-phase current induces a field current in the field winding 70. This field current generates the field magnetic flux φf, shown by the dotted line in the figure. In Figure 13, one main pole 62 (on the left side of the figure) is the N pole, and the other main pole 62 (on the right side) is the S pole on the rotor 60, causing the rotor 60 to rotate counterclockwise. The left main pole 62 is the main pole on the side of the rotor 60 facing the direction of rotation among the two main pole 62 arranged circumferentially, while the right main pole 62 is the main pole on the side of the rotor 60 facing the opposite direction of rotation.

In Figure 13, the harmonic wave phase difference θh is set to 90°. In this case, the electrical angle at which the harmonic wave 's envelope curve reaches its maximum value corresponds to the d-axis of the left main pole 62.

Figure 14 is a diagram showing composite magnetic flux of the magnetic fluxes φ1, φ2, and the field flux φf shown in Figure 13. In Figure 14, the dashed line shows the composite magnetic flux, and the double dotted line shows the magnetic flux generated by the harmonic wave (hereinafter referred to as the harmonic field flux φh).

As shown in Figure 14, the composite magnetic flux tends to increase in the portion of the tip sections of the left and right main pole 62 that are on the rotation direction side in the circumferential direction, and to decrease in the portion on the anti-rotation direction side in the circumferential direction. The harmonic field magnetizing flux φh is larger in the portion where the magnetic flux density has margin than in the portion where the magnetic flux density is large and approaches magnetic saturation.

Figure 15 is a diagram showing state of force acting on the radial tip of the main pole 62 due to the harmonic field magnetizing flux φh. The force acting on the rotational direction side portion of the tip of main pole 62 in the circumferential direction is shown as F1, and the force acting on the counter-rotational direction side portion in the circumferential direction is shown as F2. The circumferential components of forces F1 and F2 become torque ripple of the generated torque in the motor 40.

When the harmonic wave phase difference θh is 90°, due to the magnetic flux density, F1 is less than F2 is satisfied. As the harmonic wave phase difference θh decreases from 90°, F2 decreases and F1 increases. When the harmonic wave phase difference θh is near 70°, F1 is almost equal to F2. In this case, the electrical angle at which the harmonic wave (specifically, harmonic wave 's envelope curve ) reaches its maximum value during one cycle of harmonic wave 's envelope curve corresponds to the electrical angle on the left main pole 62 that aligns with the circumferential position t (see Figure 13) at the end of the rotor 60 in the direction of rotation. As the harmonic wave phase difference θh decreases from 70°, F1 becomes less than F2, and torque ripple increases.

The end portion of the main pole 62 facing the rotation direction has a higher magnetic flux density than the end portion facing the anti-rotation direction and is less susceptible to magnetic flux fluctuations caused by disturbances. Therefore, by reducing the harmonic wave phase difference θh to less than 90° and approaching 70°, it is possible to suppress torque ripple. The control device 30 may, for example, set the electrical angle at which the harmonic wave (specifically, harmonic wave 's envelope curve ) reaches its maximum value within one cycle of the harmonic wave 's envelope curve to fall within the range from the electrical angle corresponding to the main pole 62's d-axis to the electrical angle corresponding to the end position t of the main pole 62 in the circumferential direction on the rotor 60's rotation direction side. Figure 16 shows the field flux φf when the harmonic wave phase difference θh is set to each of 70°, 90°, and 110°. For example, the control device 30 may set the electrical angle at which the harmonic wave (specifically, harmonic wave 's envelope curve ) reaches its maximum value within one cycle of the harmonic wave 's envelope curve within the range from the electrical angle corresponding to the main pole 62's d-axis to the electrical angle corresponding to the aforementioned end position t + 10°.

The reference phase difference for reducing the torque ripple rate while maintaining the motor 40's maximum generated torque at a high level is applied to a phase difference with an electrical angle of 50° or more and 90° or less:
(A1) adding 180° (N=1);
(B1) subtracting 180° (N = -1); or
(C1) subtracting 180° ×2 (N = -2)

In cases (A1) and (B1), the torque ripple rate is reduced while maintaining the maximum generated torque at a high level, as shown in Figure 6, since shifting the phase of one of the two envelope curves of the harmonic wave by 180° results in a waveform matching the other envelope curve. Therefore, the control device 30 sets the reference phase difference to:
(A1) within the range between 230° and 270° in electrical angle;
(B1) within the range between -130° and -90° in electrical angle; or
(C1) within the range between -310° and -270° in electrical angle.

In this case, for each of the reference phase difference setting methods, values obtained by adding 180°, subtracting 180°, or subtracting 360° may be used. Specifically, in the case of (A1), the reference phase difference may be set within the range between 240° and 260°, within the range between 245° and 255°, within the range between 240° and 250°, or within the range between 250° and 260°.

Figure 17 shows a flowchart of the torque control process performed by the control device 30. The torque control process may be repeatedly performed, for example, at a predetermined control cycle.

In step S10, the command current calculation unit 101 calculates the d-axis command current Id* and the q-axis command current Iq*. In step S11, the current control unit 102 and the three-phase conversion unit 103 calculate the U, V, and W-phase voltage command values VU*, VV*, and VW* based on the d-axis command current Id* and the q-axis command current Iq*.

In step S12, the signal generation unit 104 generates the drive signals for the upper and lower arm switches SUp to SWn of the U, V, and W-phase based on the U, V, and W-phase voltage command values VU*, VV*, and VW*. The control device 30 performs switching control of the inverter 20 by inputting the generated drive signals to the gates of each switch.

According to the present embodiment described above, torque ripple of the motor 40 is suppressed. As a result, noise and vibration generated during the drive of the motor 40 is suppressed. Furthermore, by using a simple parameter such as the harmonic wave phase difference θh as a parameter for reducing torque ripple, the processing of the control device 30 is simplified.

### < Second Embodiment >

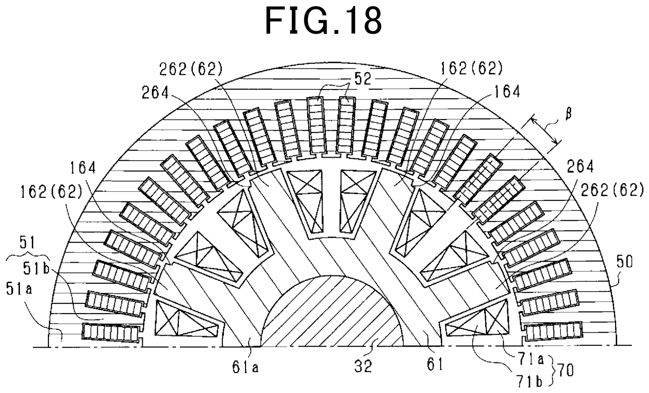

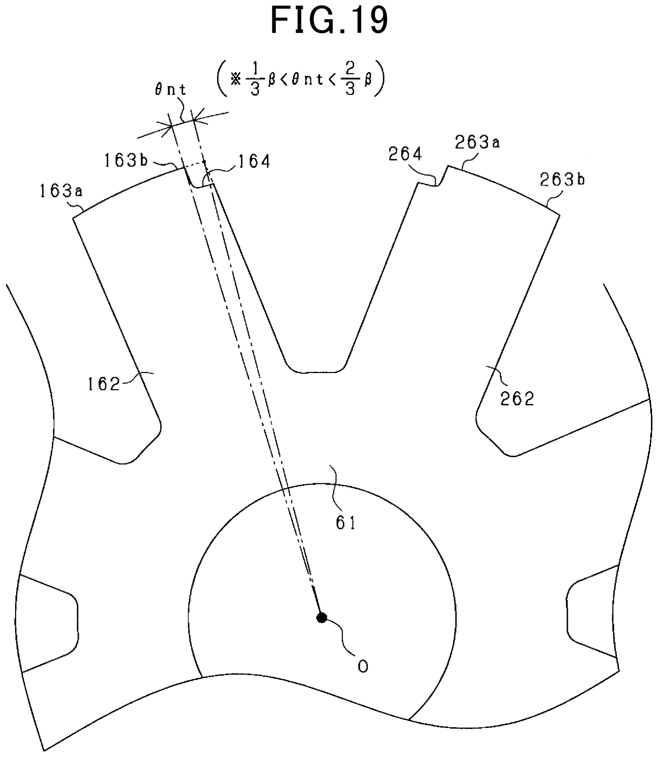

The following describes a second embodiment, focusing on the differences from the first embodiment while referring to the drawings. In this embodiment, as shown in Figures 18 and 19, a notch is formed at the tip of the main pole 62. This enhances the torque ripple reduction effect.

Among the two main poles 62 adjacently arranged circumferentially, one is defined as the first main pole 162 and the other as the second main pole 262. Circumferentially, a plurality of the first main pole 162 and a plurality of the second main pole 262 are arranged alternately.

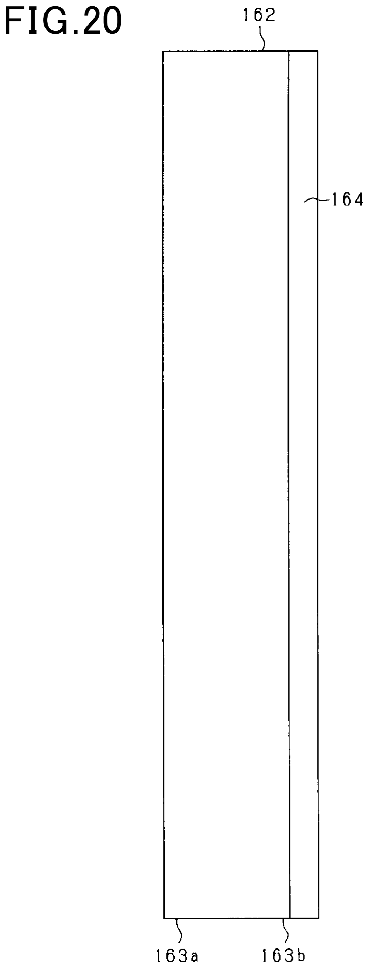

In the first main pole 162, a first terminal 163a and a second terminal 163b are two circumferential terminals of a radial terminal near the stator 50 of the first main pole 162. The second terminal 163b is circumferentially near the second main pole 262, and the first terminal 163a is circumferentially far from the second main pole 262. As shown in Figure 20, a first notch 164 extending from one axial end to the other axial end of the first main pole 162 is formed at the second terminal 163b of the first main pole 162. The first notch 164 is a notch opening radially outward (toward the stator side) and circumferentially.

The second main pole 262 is defined as being radially closer to the stator 50, with its two terminals defined as the first terminal 263a and the second terminal 263b in the circumferential direction. The first terminal 263a is circumferentially closer to the first main pole 162, while the second terminal 263b is circumferentially farther from the first main pole 162. A second notch 264 extends from one axial end to the other axial end of the first terminal 263a of the second main pole 262. The second notch 264 is a notch opening radially outward (toward the stator side) and circumferentially.

In this embodiment, as shown in Figure 19, a circumferential width θnt of the first notch 164 is set such that [(1/3) × β < θnt < (2/3) × β] is satisfied. A circumferential width θnt of the second notch 264 is similarly set such that [(1/3) × β < θnt < (2/3) × β] is satisfied. This setting is employed to suppress torque ripple of the motor 40. In this embodiment, the circumferential width of both the first notch 164 and the second notch 264 is set as β/2. This enhances the effect of reducing torque ripple.

The θnt may be any value within the range of [(1/3) × β < θnt < (2/3) × β] other than β/2. As long as θnt falls within the range of [β × (180°/360°) ± β × (60°/360°)], it is possible to suppress torque ripple.

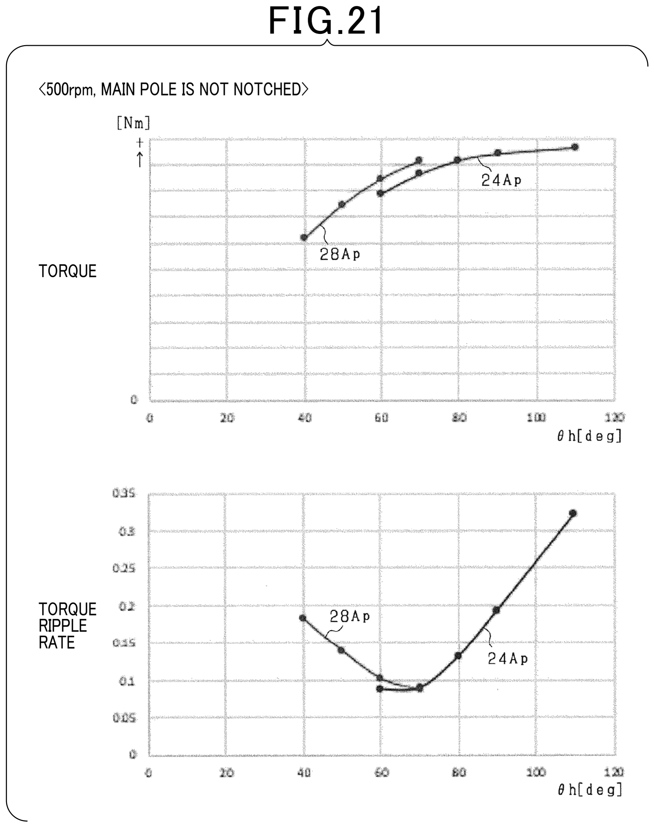

Next, the effects of the first notch 164 and the second notch 264 on torque ripple are described. First, using Figures 21 to 24, cases without the first notch 164 and the second notch 264 is described.

Figure 21 shows calculation results showing the relationship between the harmonic wave phase difference θh and the generated torque of the motor 40, and calculation results showing the relationship between the harmonic wave phase difference θh and the torque ripple rate, when the speed of the rotor 60 is 500 rpm. The speed is set as a low value of 500 rpm to facilitate distinguishing the effects on torque ripple caused by the frequency components of harmonic wave from the effects of slot ripple.

In Figure 21, the 24Ap line shows the respective calculation results when harmonic wave has a peak value of 24% of the fundamental wave peak value, and the 28Ap line shows the respective calculation results when the peak of the harmonic wave is 28% of the peak value of the fundamental wave. Calculations for the 24Ap line were performed for harmonic wave phase difference θh values of 110°, 90°, 80°, 70°, and 60°, while calculations for the 28Ap line were performed for each of the harmonic wave phase difference θh values of 70°, 60°, 50°, and 40°. The peak value of harmonic wave is increased in the region where the harmonic wave phase difference θh is less than 70° to minimize the variation in the maximum generated torque of the motor 40. In each graph of Figure 21, the horizontal axis scale is the same as in Figure 10, and the vertical axis scale is also the same as in Figure 10.

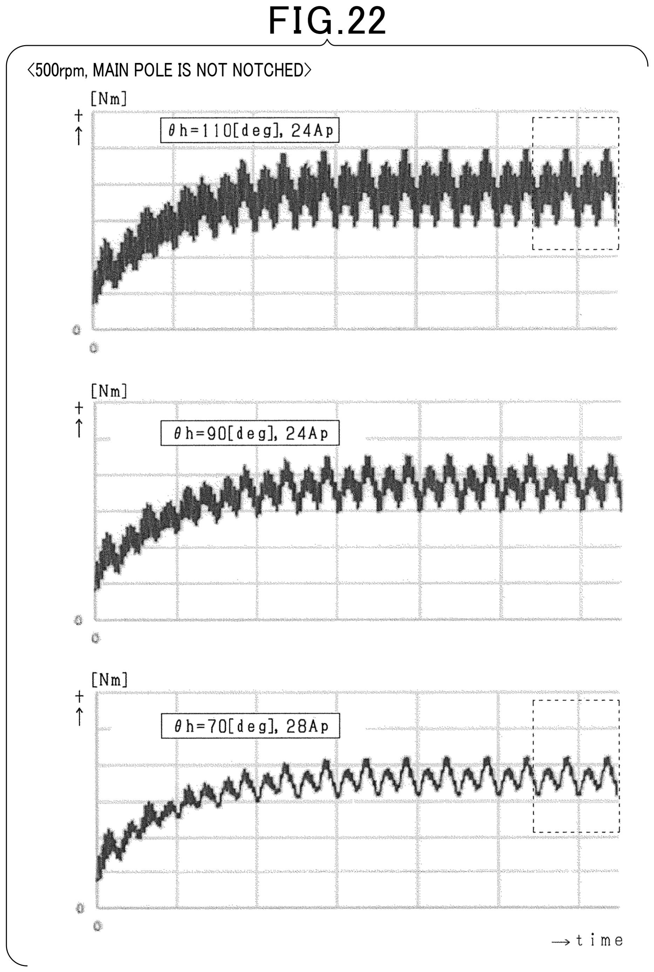

Among the calculation results for generated torque and torque ripple rate shown in Figure 21, the results corresponding to each of the harmonic wave phase difference θh values of 110°, 90°, and 70° are obtained from the calculated generated torque transition results shown in Figure 22. In each graph of Figure 22, the horizontal axis scale is the same for each graph, and the vertical axis scale is also the same for each graph.

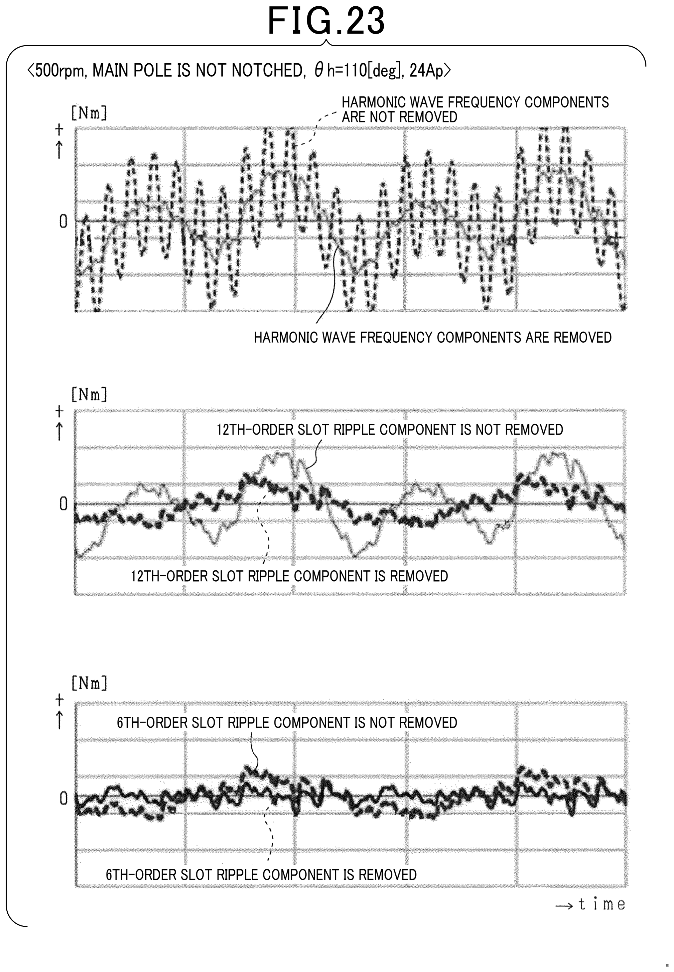

Among the graphs shown in Figure 22, the case where [θh = 110°, 24A] is described. In the upper graph of Figure 23, the dashed line shows torque transition for the portion enclosed by the dashed line in the upper graph of Figure 22. In each graph of Figure 22, the horizontal axis scale is the same, and the vertical axis scale is also the same.

In the upper graph of Figure 23, the solid line shows torque transition in which the harmonic wave frequency components are removed from torque transition shown by the dashed line. The torque transition in which the harmonic wave frequency components are removed contains a 12th-order slot ripple component.

In the middle graph of Figure 23, the solid line is the same as the solid line in the upper graph. The dashed line shows the torque transition in which the 12th-order slot ripple component is removed from the torque transition of the solid line. The torque transition in which the 12th-order slot ripple component is removed contains a 6th-order slot ripple component.

In the lower graph of Figure 23, the dashed line is the same as the dashed line in the middle graph, and the solid line shows the torque transition with the 6th-order slot ripple component removed from the torque transition of the dashed line.

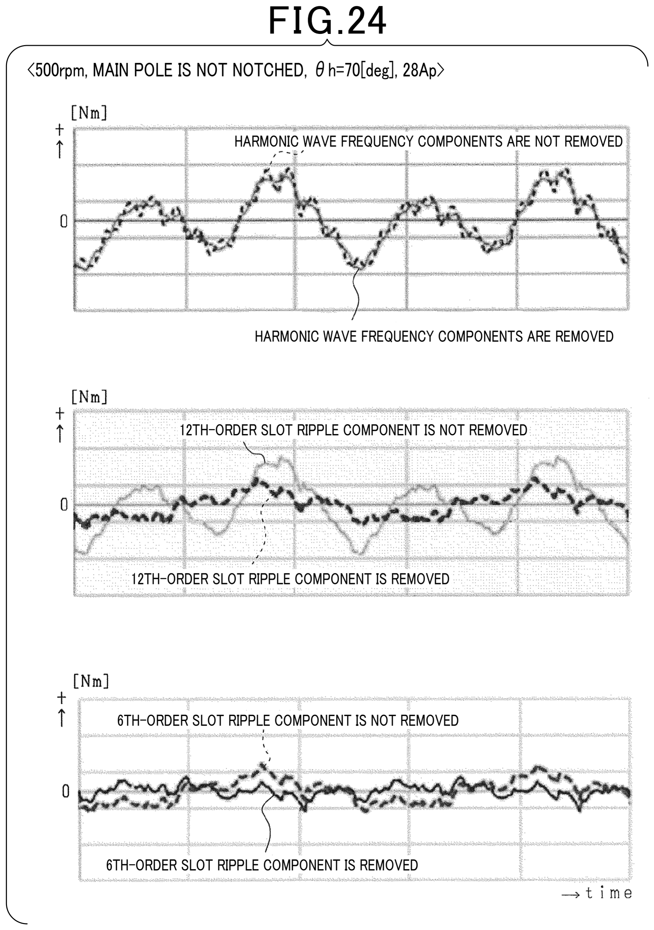

The case of [θh = 70°] point on the 28Ap line in the graph shown in Figure 22 is described. In the upper graph of Figure 24, the dashed line shows torque transition for the portion enclosed by the dashed line in the lower graph of Figure 22. The horizontal axis scales are identical across all graphs in Figure 24, and the vertical axis scales are also identical. Comparing the dashed line trends in the upper graphs of Figures 24 and 23 reveals that advancing the harmonic wave phase difference θh by approximately 40° suppresses torque ripple caused by the harmonic wave.

In the upper graph of Figure 24, the solid line shows torque transition in which the frequency components of the harmonic wave are removed from the torque transition shown by the dashed line. The torque transition in which the frequency components of the harmonic wave are removed contains 12th-order slot ripple component.

In the middle graph of Figure 24, the solid line is the same as the solid line in the upper graph. The dashed line shows torque transition in which the 12th-order slot ripple component is removed from the torque transition of the solid line. The torque transition in which the 12th-order slot ripple component is removed contains 6th-order slot ripple component.

In the lower graph of Figure 24, the dashed line is the same as the dashed line in the middle graph, and the solid line shows torque transition in which the 6th-order slot ripple component is removed from the torque transition of the dashed line.

It is seen in the calculation results in Figures 23 and 24, in a configuration without the first notch 164 and the second notch 264, torque ripple caused by the slot ripple component become larger.

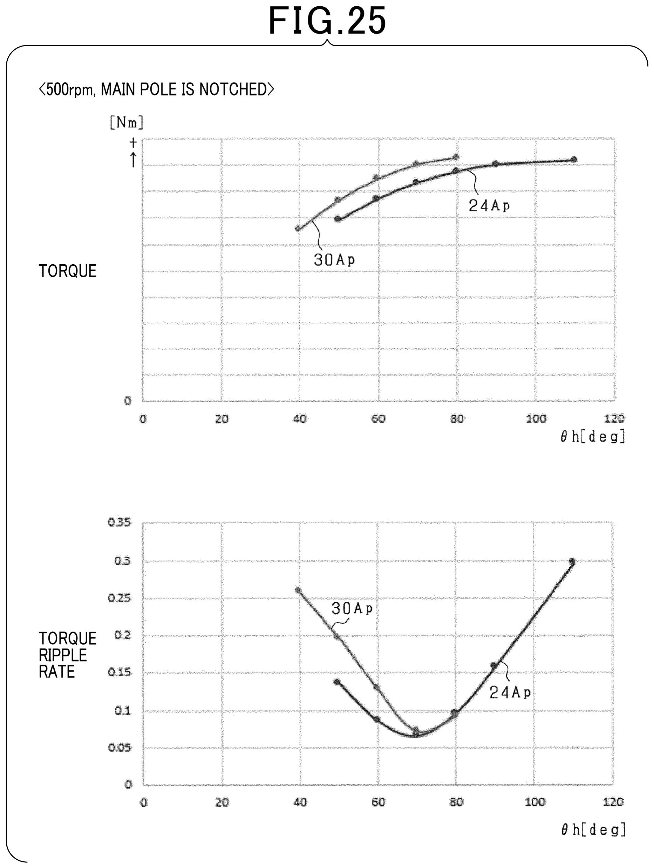

Next, using Figures 25 to 28, cases where the first notch 164 and the second notch 264 are provided are described.

Figure 25 shows calculation results of the relationship between the harmonic wave phase difference θh and the generated torque of the motor 40 when the speed of the rotor 60 is 500 rpm, and calculation results of the relationship between the harmonic wave phase difference θh and the torque ripple rate. In Figure 25, the 24Ap line shows the respective calculation results when the peak of the harmonic wave is 24% of the peak of the fundamental wave, and the 30Ap line shows the respective calculation results when the peak of the harmonic wave is 30% of the peak of the fundamental wave. In each graph of Figure 25, the horizontal axis scale is the same as in Figure 21, and the vertical axis scale is also the same as in Figure 21.

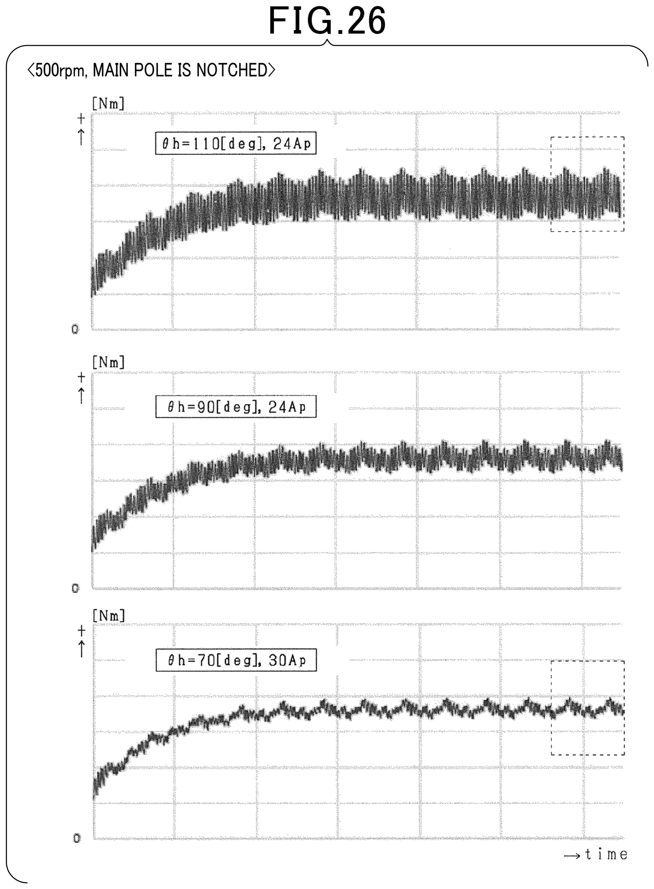

Among the calculation results for the generated torque and the torque ripple rate shown in Figure 25, the results corresponding to each of the harmonic wave phase differences θh of 110°, 90°, and 70° are obtained from calculation results for transition of the generated torque shown in Figure 26. In each graph of Figure 26, the horizontal axis scale is the same, and the vertical axis scale is also the same.

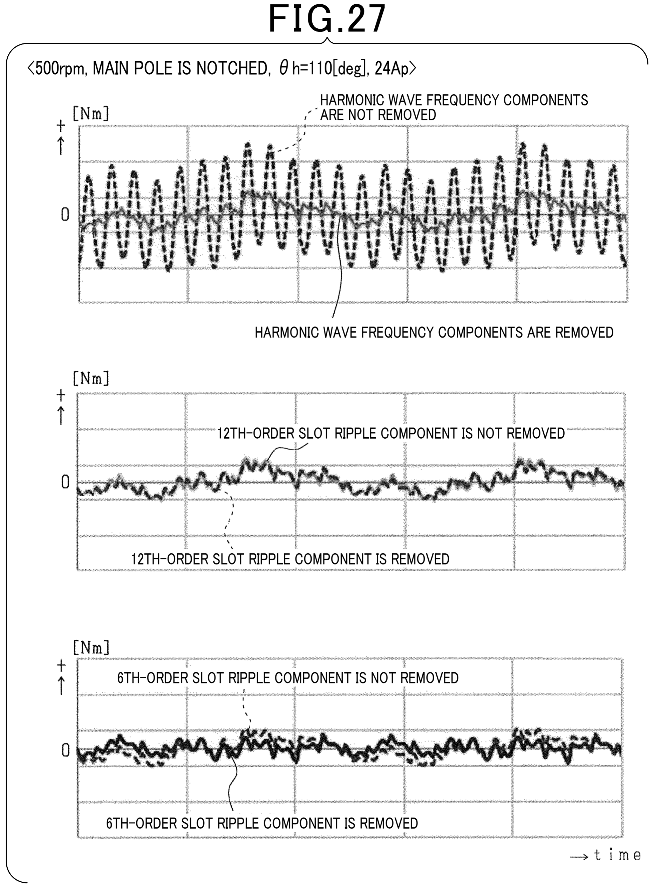

Among the graphs shown in Figure 26, the case of [θh = 110°] on the 24Ap line is described. In the upper graph of Figure 27, the dashed line shows torque transition for the portion enclosed by the dashed line in the upper graph of Figure 26. In each graph of Figure 27, the horizontal axis scale is the same, and the vertical axis scale is also the same.

In the upper graph of Figure 27, the solid line shows torque transition in which the harmonic wave frequency components are removed from the torque transition shown by the dashed line. The torque transition in which the harmonic wave frequency components are removed includes 12th-order slot ripple component.

In the middle graph of Figure 27, the solid line is the same as the solid line in the upper graph. The dashed line shows torque transition in which the 12th-order slot ripple component is removed from the torque transition of the solid line. The torque transition is similar before and after removal of the 12th-order slot ripple component. Therefore, the slot ripple component is reduced by the first notch 164 and the second notch 264.

In the lower graph of Figure 27, the dashed line is the same as the dashed line in the middle graph, and the solid line shows the torque curve in which the 6th-order slot ripple component is removed from the torque curve of the dashed line. The torque curve is similar before and after removal of the 6th-order slot ripple component.

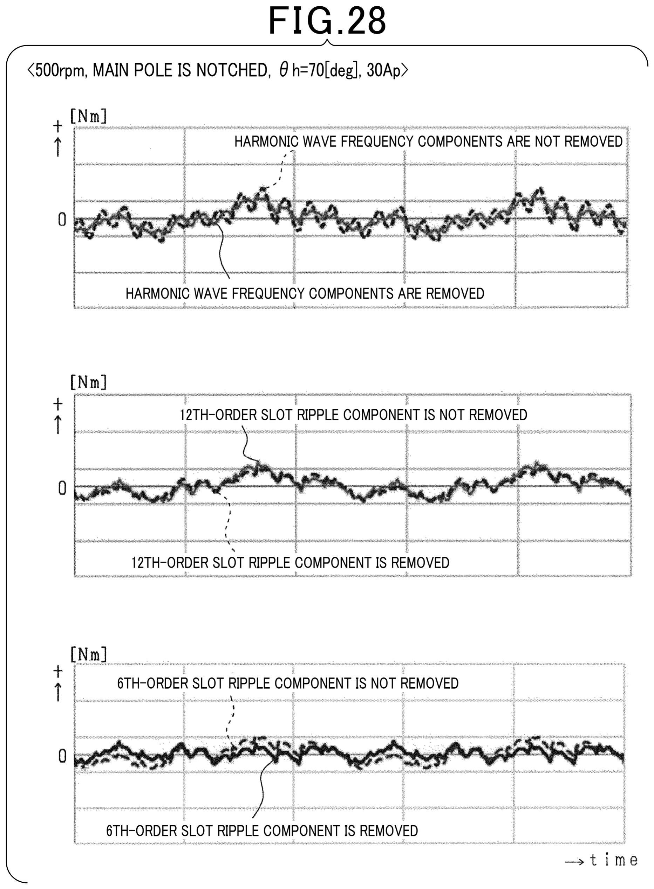

The case of [θh = 70°] on the 30Ap line in the graph shown in Figure 26 is described. In the upper graph of Figure 28, the dashed line shows torque transition for the portion enclosed by the dashed line in the lower graph of Figure 26. The horizontal axis scales are identical across all graphs in Figure 28, and the vertical axis scales are also identical. Comparing the dashed line trends in the upper graphs of Figures 28 and 27 reveals that advancing the harmonic wave phase difference θh by approximately 40° suppresses torque ripple caused by the harmonic wave.

In the upper graph of Figure 28, the solid line shows torque transition in which the frequency components of the harmonic wave are removed from the torque transition shown by the dashed line. The torque transition in which the frequency components of the harmonic wave are removed contains a 12th-order slot ripple component.

In the middle graph of Figure 28, the solid line is the same as the solid line in the upper graph. The dashed line shows torque transition in which the 12th-order slot ripple component is removed from the torque transition of the solid line. The torque transition is similar before and after removal of the 12th-order slot ripple component. Therefore, the slot ripple component is reduced by the first notch 164 and the second notch 264. The torque curve in which the 12th-order slot ripple component is removed still contains a 6th-order slot ripple component.

In the lower graph of Figure 28, the dashed line is the same as the dashed line in the middle graph, and the solid line shows the torque transition after removing the sixth-order slot ripple component from the torque transition of the dashed line.

The calculation results in Figures 27 and 28 show that the configuration with the first notch 164 and the second notch 264 effectively suppresses torque ripple caused by the slot ripple component.

### <Third Embodiment>

The following describes the third embodiment, focusing on the differences from the first embodiment while referring to the drawings. In this embodiment, when the phase of the fundamental wave flowing through the stator winding 52 deviates from the reference phase θb, the control device 30 performs adjustment processing on the reference phase difference based on the degree of the phase deviation of the fundamental wave from the reference phase θb.

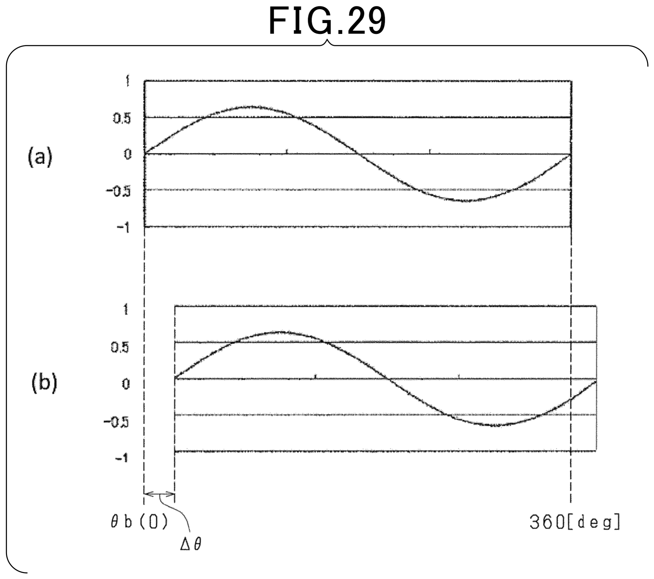

Part (a) of Figure 29 shows a case where the phase of the fundamental wave is the reference phase θb, corresponding to part (a) of Figure 6. In other words, part (a) of Figure 29 shows a case where the zero-up cross timing of the fundamental wave corresponds to the reference phase θb. Part (b) of Figure 29 shows a case where the phase of the fundamental wave deviates from the reference phase θb. In the example shown in Figure 29 (and Figure 6), the reference phase θb is the electrical angle 0°.

Part (a) of Figure 29 corresponds, for example, to the case shown in Figure 13. Part (b) of Figure 29 shows a case where the phase of fundamental wave is advanced relative to the reference phase θb. The control device 30 advances the phase of the fundamental wave relative to the reference phase θb, for example, when performing weakened field control.

When the reference phase is not adjusted even though the phase of fundamental wave has deviated from the reference phase θb, the reference phase θb being a target value of the harmonic wave phase difference θh, the torque ripple reduction effect may be diminished. For example, when the reference phase is not adjusted even though the phase of fundamental wave is advanced from the reference phase θb due to weakened field control, the phase of the harmonic field flux φh may become excessively advanced relative to the proper phase, potentially reducing the torque ripple reduction effect. Therefore, the control device 30 performs reference phase difference adjustment process.

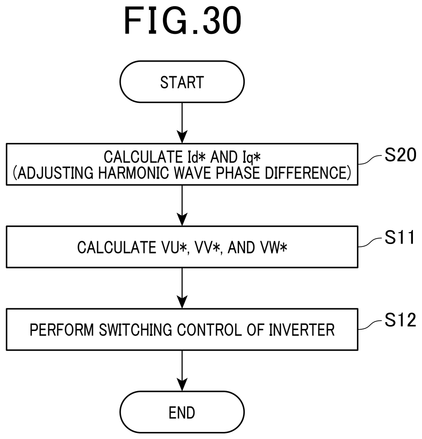

Figure 30 shows a flowchart of the torque control process, including the reference phase difference adjustment process, executed by the control device 30. This process is repeatedly performed, for example, at a predetermined control cycle.

In step S20, the command current calculation unit 101 calculates the phase deviation amount Δθ of the fundamental wave phase relative to the reference phase θb. In this embodiment, the sign of the deviation amount Δθ is positive when the fundamental wave phase leads the reference phase θb. The fundamental wave phase may be calculated based on, for example, the detection value from the current sensor 21.

The command current calculation unit 101 calculates the d-axis command current Id* and the q-axis command current Iq* such that the harmonic wave phase difference θh becomes the reference phase difference. The command current calculation unit 101 may set reference phase difference within the range between [50° + 180° × N] and [90° + 180° × N] when the calculated phase shift Δθ is 0°.

On the other hand, when the calculated deviation amount Δθ is a non-zero value, the command current calculation unit 101 sets the reference phase difference to be within the range between [50° + 180° × N - Δθ] and [90° + 180° × N - Δθ]. After completing the processing of step S20, process proceeds to step S11.

According to the present embodiment described above, it is possible to suppress the situation that the harmonic wave phase difference θh deviates from the proper phase difference range, that is appropriate to achieve the torque ripple reduction effect.

### <Other Embodiments>

The above embodiments may be modified as follows.

In the second embodiment, when the calculated deviation amount Δθ is a non-zero value, the control device 30 may calculate a predetermined amount Δτ whose absolute value is smaller than the deviation amount Δθ and set the reference phase difference within the range between [50° + 180° × N - Δτ] and [90° + 180° × N - Δτ]. The predetermined amount Δτ may be set within the range of [0.7 × Δθ ≤ Δτ ≤ 0.9], for example.

In the second embodiment, the first notch 164 may be formed on a portion of the axial direction of the second end portion 163b of the first main pole 162, instead of from one axial end to the other. Similarly, the second notch 264 may be formed on a portion of the axial direction of the first end portion 263a of the second main pole 262, instead of from one axial end to the other.

The second winding 71b may be positioned radially closer to the stator 50 than the first winding 71a.

The capacitor 90 constituting the resonant circuit may be electrically connected in parallel with the first winding 71a instead of the second winding 71b. Furthermore, in the resonant circuit, the anode of the diode 80 may be connected to the side of the first winding 71a, and the cathode of the diode 80 may be connected to the side of the second winding 71b, among the series-connected elements of the first winding 71a and the second winding 71b.

The motor may be an outer rotor type motor, not limited to an inner rotor type motor. In this case, main pole protrudes radially inward from the rotor core.

The motor may be a delta-connected motor, and is not limited to a star-connected motor.

In the first embodiment, the stator core may be a stator core without teeth.

The motor may be used not only as a vehicle main engine but also, for example, as an ISG (Integrated Starter Generator), which is an electric motor and generator.

The mobile body on which the control system is mounted is not limited to a vehicle, but may also be, for example, an aircraft or a vessel. Furthermore, the control system is not limited to a system mounted on a mobile body but may also be a stationary system.

The control device and its method described herein may be implemented by a dedicated computer provided by configuring a processor and memory programmed to execute one or more functions embodied by a computer program. Alternatively, the control device and its method described herein may be implemented by a dedicated computer provided by configuring a processor using one or more dedicated hardware logic circuits. Alternatively, the control device and its method described herein may be implemented by one or more dedicated computers configured by a combination of a processor and memory programmed to execute one or more functions, and one or more processors configured by hardware logic circuits. Furthermore, the computer program may be stored on a computer-readable, non-transitory tangible medium as instructions executable by a computer.

The present disclosure has been described in accordance with embodiments, but the present disclosure is not limited to these embodiments or structures. The present disclosure also encompasses various modifications and modifications within the scope of equivalents. Furthermore, various combinations and forms, as well as other combinations and forms containing only one element thereof, more than one element, or fewer elements, also fall within the scope and spirit of the present disclosure.

## Claims

1. A motor control device applied to a system comprising: a motor (40) including a stator (50) provided with a stator winding (52) and a rotor (60) provided with a field winding (70); and an inverter (20) electrically connected to the stator winding, wherein
the rotor comprises a rotor core (61), a plurality of main poles (62), diodes (80), and capacitors (90),
the plurality of main poles are provided at predetermined intervals in the circumferential direction and protrude radially from the rotor core,
the field winding includes a first winding (71a) and a second winding (71b) electrically connected in series,
the first winding and the second winding are wound around each of the plurality of main poles,
each of the diodes is electrically connected in parallel with a series-connected element of the first winding and second winding,
each of the capacitors is electrically connected in parallel with either the first winding or the second winding,
the motor control device comprises:
a synthetic current calculation unit configured to calculate a synthetic current by superimposing a harmonic wave to induce a field current in the field winding, onto a fundamental wave flowing through the stator winding; and
a switch control unit configured to perform switching control of the inverter to cause the synthetic current to flow through the stator winding,
the synthetic current calculation unit is configured to calculate synthetic current such that: the frequency of the harmonic wave 's envelope curve is equivalent to the frequency of fundamental wave; and the phase angle (θh) between the envelope curve and the fundamental wave is equivalent to a reference phase difference, and
the synthetic current calculation unit is configured to set the reference phase difference within the range of [50° + 180° × N] and [90° + 180° × N] in electrical angle (N = 0, 1, -1, -2).

2. The motor control device according to Claim 1, wherein
in a case that the phase of the fundamental wave is equivalent to the reference phase (θb), the synthetic current calculation unit sets the reference phase difference to be within the range of[50° + 180° × N] and[90° + 180° × N] in electrical angle, and
in a case that the phase of fundamental wave deviates from the reference phase, the synthetic current calculation unit adjusts the reference phase difference based on the degree of phase deviation of the fundamental wave from the reference phase.

3. A motor control device applied to a system comprising: a motor (40) including a stator (50) provided with a stator winding (52) and a rotor (60) provided with a field winding (70); and an inverter (20) electrically connected to the stator winding, wherein
the rotor comprises a rotor core (61), a plurality of main poles (62), diodes (80), and capacitors (90),
the plurality of main poles are provided at predetermined intervals in the circumferential direction and protrude radially from the rotor core,
the field winding includes a first winding (71a) and a second winding (71b) electrically connected in series,
the first winding and the second winding are wound around each of the plurality of main poles,
each of the diodes is electrically connected in parallel with a series-connected element of the first winding and second winding,
each of the capacitors is electrically connected in parallel with either the first winding or the second winding,
the motor control device comprises:
a synthetic current calculation unit configured to calculate a synthetic current by superimposing a harmonic wave to induce a field current in the field winding, onto a fundamental wave flowing through the stator winding; and
a switch control unit configured to perform switching control of the inverter to cause the synthetic current to flow through the stator winding,
the synthetic current calculation unit is configured to calculate synthetic current such that a first condition and a second condition are satisfied,
the first condition is that the frequency of the harmonic wave 's envelope curve is equivalent to the frequency of fundamental wave, and
the second condition is that the electrical angle at which the harmonic wave reaches becomes maximum value is within the range between the electrical angle corresponding to the d-axis of the main pole and the electrical angle corresponding to the end position on the rotor rotation direction side in the circumferential direction of the main pole.

4. The motor control device according to Claim 1, wherein
the synthetic current calculation unit sets the reference phase difference to be within the range between 60° and 80° in electrical angle.

5. The motor control device according to any one of Claims 1 to 4, wherein
the stator comprises:
a back yoke (51a); and
a plurality of teeth (51b) arranged circumferentially and protruding radially from the back yoke toward the rotor side,
wherein, among two respective terminal of the two main poles of the rotor adjacently arranged circumferentially:
a terminal (163b) of a first main pole (162) located near the stator radially and facing a second main pole (262) circumferentially is provided with a first notch (164) extending in the rotor's axial direction; and
a terminal (263a) of the second main pole located near the stator radially and facing the first main pole is provided with a second notch (264) extending in the rotor's axial direction.

6. The motor control device according to Claim 5, wherein
[(1/3) × β < θnt < (2/3) × β] is satisfied, where β is the stator slot pitch, and θnt is the circumferential width of each of the first notch and the second notch.

7. The motor control device according to Claim 6, wherein
θnt is β/2.

8. A program applied to a system comprising: a motor (40) including a stator (50) provided with a stator winding (52) and a rotor (60) provided with a field winding (70); an inverter (20) electrically connected to the stator winding, and a computer wherein
the rotor comprises a rotor core (61), a plurality of main poles (62), diodes (80), and capacitors (90),
the plurality of main poles are provided at predetermined intervals in the circumferential direction and protrude radially from the rotor core,
the field winding includes a first winding (71a) and a second winding (71b) electrically connected in series,
the first winding and the second winding are wound around each of the plurality of main poles,
each of the diodes is electrically connected in parallel with a series-connected element of the first winding and second winding,
each of the capacitors is electrically connected in parallel with either the first winding or the second winding,
the program is configured to cause the computer to:
calculate a synthetic current by superimposing a harmonic wave to induce a field current in the field winding, onto a fundamental wave flowing through the stator winding; and
perform switching control of the inverter to cause the synthetic current to flow through the stator winding,
when calculating the synthetic current, the program causes the computer to calculate synthetic current such that: the frequency of the harmonic wave 's envelope curve is equivalent to the frequency of fundamental wave; and the phase angle (θh) between the envelope curve and the fundamental wave is equivalent to a reference phase difference, and
sets the reference phase difference to be within the range of [50° + 180° × N] and [90° + 180° × N] in electrical angle (N = 0, 1, -1, -2).
